# EUROPEAN PATENT APPLICATION

(11) **EP 4 152 838 A1**
(43) Date of publication of application: **22.03.2023**
(21) Application number: 21197475.3
(22) Date of filing: 17.09.2021
(51) Int. Cl.: H04W 56/00, H04W 84/20, H04W 52/02

(54) **SIDELINK SYNCHRONIZATION**

(71) Applicant: Nokia Technologies Oy, 02610 Espoo (FI)
(72) Inventor: KESHAVAMURTHY, Prajwal, 81241 Munich (DE); YU, Ling, 02700 Kauniainen (FI); VAN PHAN, Vinh, 90100 Oulu (FI); KIILERICH PRATAS, Nuno Manuel, 9260 Gistrup (DK)
(74) Representative: Nokia EPO representatives

(57) **Abstract**

Apparatus and method for sidelink synchronization are provided. Solution comprises obtaining (300) first sidelink synchronization information from a first terminal device acting as a synchronization source; receiving (302) sidelink shared channel transmissions from another terminal device; identifying (304) the other terminal device as a candidate synchronization source based on second sidelink synchronization information included in a sidelink shared channel transmission received from the other terminal device; determining (306) whether to perform a search for a new synchronization source or to retain the first terminal device as the current synchronization source based on at least one of the first sidelink synchronization information, the second sidelink synchronization information, and measurement of at least one sidelink shared channel transmission received from the other terminal device.

## Description

### Field

The exemplary and non-limiting embodiments of the invention relate generally to wireless communication systems. Embodiments of the invention relate especially to apparatuses and methods in wireless communication networks.

### Background

Wireless communication systems are under constant development. In typical cellular wireless communication systems, terminal devices communicate with each other via one or more cellular base stations. With sidelink communications, terminal devices may communicate with each other directly without going through a base station or cellular node. In 5G, the sidelink air interface is called PC5 interface. Sidelink communications have been proposed to be used in connection with Public Safety and Intelligent Transportation Systems, ITS, which is designed to improve road safety and traffic efficiency. Communication between vehicles and between infrastructure is a vital part of ITS. Vehicle-to-vehicle communication, V2V, vehicle-to-infrastructure communication, V2I, and Vehicle to Everything, V2X, will enable communication related to various use cases, such as broadcasting situation awareness messages for assisted driving, sending emergency alerts (braking and vulnerable road user detection, for example) to increase safety, executing cooperative manoeuvres such as lane merging or vehicle platooning and more. However, the use of sidelink is not limited to above examples.

So far, sidelink communication has been developed assuming that participating terminal devices have sufficient battery capacity, being installed in moving vehicles, for example. However, this is not always the case. There is a need to reduce power consumption due to increased applicability of sidelink communication in power-constrained devices such as vulnerable road users (VRU).

### Summary

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided an apparatus of claim 1.

According to an aspect of the present invention, there is provided a method of claim 9.

According to an aspect of the present invention, there is provided a computer program of claim 14.

One or more examples of implementations are set forth in more detail in the accompanying drawings and the description below. Other features will be apparent from the description and drawings, and from the claims. The embodiments and/or examples and features, if any, described in this specification that do not fall under the scope of the independent claims are to be interpreted as examples useful for understanding various embodiments of the invention.

### List of drawings

Embodiments of the present invention are described below, by way of example only, with reference to the accompanying drawings, in which
Figures 1 and 2 illustrate examples of simplified system architecture of a communication system;
Figure 3 is a flowchart illustrating an embodiment;
Figures 4A, 4B, 4C and 4C are charts illustrating some embodiments; and
Figure 5 illustrates an example of an apparatus.

### Description of some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain features, structures, units, modules etc. that have not been specifically mentioned.

The protocols used, the specifications of communication systems, servers and user equipment, especially in wireless communication, develop rapidly. Such development may require extra changes to an embodiment. Therefore, all words and expressions should be interpreted broadly, and they are intended to illustrate, not to restrict, embodiments.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. The embodiments may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

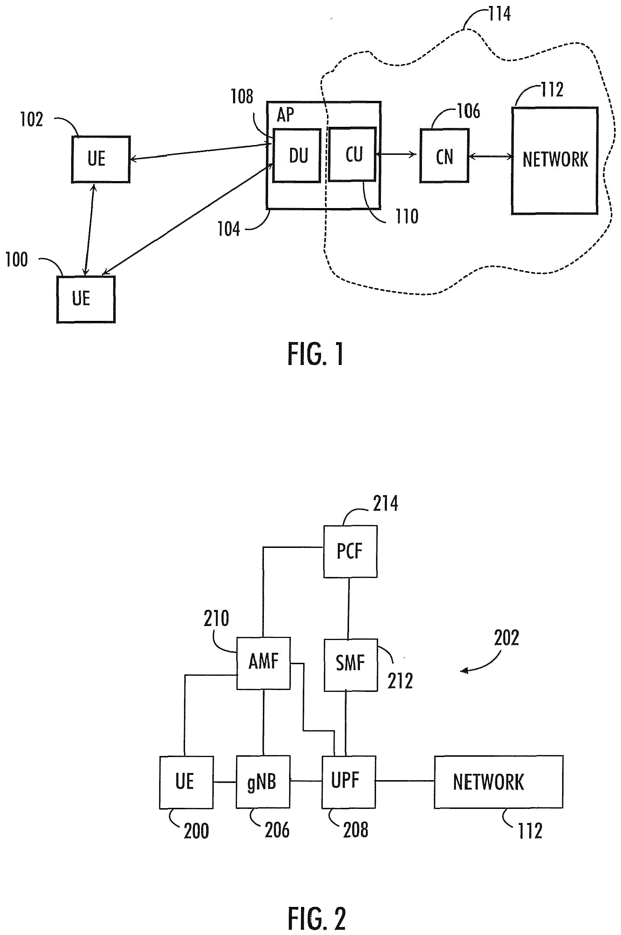

Fig. 1 depicts examples of simplified system architectures only showing some elements and functional entities, all being logical units, whose implementation may differ from what is shown. The connections shown in Fig. 1 are logical connections; the actual physical connections may be different. It is apparent to a person skilled in the art that the system typically comprises also other functions and structures than those shown in Fig. 1.

The embodiments are not, however, restricted to the system given as an example but a person skilled in the art may apply the solution to other communication systems provided with necessary properties.

The example of Fig. 1 shows a part of an exemplifying radio access network.

Fig. 1 shows devices 100 and 102. The devices 100 and 102 are configured to be in a wireless connection on one or more communication channels with a node 104. The node 104 is further connected to a core network 106. In one example, the node 104 may be an access node such as (e/g)NodeB serving devices in a cell. In one example, the node 104 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of the communication system it is coupled to. The (e/g)NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bidirectional radio links to devices. The antenna unit may comprise a plurality of antennas or antenna elements. The (e/g)NodeB is further connected to the core network 106 (CN or next generation core NGC). Depending on the deployed technology, the (e/g)NodeB is connected to a serving and packet data network gateway (S-GW + P-GW) or a user plane function (UPF), for routing and forwarding user data packets and for providing connectivity of devices to one or more external packet data networks, and to a mobile management entity (MME) or an access mobility management function (AMF), for controlling access and mobility of the devices.

Exemplary embodiments of a device are a subscriber unit, a user device, a user equipment (UE), a user terminal, a terminal device, a mobile station, a mobile device, etc

The device typically refers to a mobile or static device ( e.g. a portable or non-portable computing device) that includes wireless mobile communication devices operating with or without an universal subscriber identification module (USIM), including, but not limited to, the following types of devices: mobile phone, smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud.

The device illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station. The device (or in some embodiments a layer 3 relay node) is configured to perform one or more of user equipment functionalities.

The communication system is also able to communicate with other networks 112, such as a public switched telephone network, or a VoIP network, or the Internet, or a private network, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 108) and non-real time functions being carried out in a centralized manner (in a centralized unit, CU 110).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

It is obvious for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or pico-cells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

Fig.2 illustrates an example of a communication system based on 5G network components. A user terminal or user equipment 200 communicating via a 5G network 202 with a data network 112. The user terminal 200 is connected to a Radio Access Network RAN node, such as (e/g)NodeB 206 which provides the user terminal with a connection to the network 112 via one or more User Plane Functions, UPF 208. The user terminal 200 is further connected to Core Access and Mobility Management Function, AMF 210, which is responsible for handling access and mobility management tasks and can be seen from this perspective as the 5G version of Mobility Management Entity, MME, in LTE. The 5G network further comprises Session Management Function, SMF 212, which is responsible for subscriber sessions, such as session establishment, modify and release, and a Policy Control Function, PCF 214 which is configured to govern network behavior by providing policy rules to control plane functions.

In sidelink, SL, communication, the terminal devices may communicate with each other without going through a base station or cellular node. The communication may be between a terminal device to another (unicast), or from one terminal device to many (broadcast, groupcast).

In sidelink communication, the transmissions are organized in frames identified by a direct frame number, DFN. The direct frame number enables a terminal device to synchronize its radio frame transmissions according to the sidelink timing reference. The terminal devices communication using sidelink perform sidelink synchronization to have the same sidelink timing reference for sidelink communication among nearby terminal devices by synchronizing with a synchronization source acting as a reference. There are four synchronization source types for synchronization reference: Global Navigation Satellite System, GNSS, NR Cell base station, gNB, EUTRAN Cell base station, eNB, a SyncRef UE or terminal device, or the internal clock of the terminal device itself. Here, SyncRef UE denotes a terminal device acting as synchronization reference source that either extends the synchronization coverage of another synchronization source (such as GNSS, gNB/eNB or another SyncRef UE), or uses its own internal clock as the synchronization reference.

A terminal device which acts as a SyncRef UE is configured to transmit sidelink synchronization information in sidelink synchronization signal block, S-SSB, to provide synchronization reference to other sidelink terminal devices. The sidelink synchronization information carried in S-SSB consists of: Sidelink Primary Synchronization Signal S-PSS, Sidelink Secondary Synchronization Signal S-SSS, and Physical Sidelink Broadcast Channel PSBCH.

Sidelink Primary and Secondary Synchronization Signals S-PSS and S-SSS are used for time and frequency synchronization and may here jointly be referred to as a sidelink synchronization signal, SLSS. The S-PSS and S-SSS may be selected out of the candidate sequences based on a sidelink synchronization signal identifier, SLSS ID, which represents an identifier of the SyncRef UE and conveys a synchronization priority of the SyncRef UE. PSBCH in turn carries a Master Information Block Sidelink, MIB-SL, which includes DFN, slot index, and a one-bit indicator "inCoverage" as to whether the SyncRef UE is in coverage of a network or of a GNSS.

In an embodiment, each SLSS ID corresponds to a unique combination of an S-PSS and S-SSS out of 2 S-PSS and 336 S-SSS candidate sequences, with the following relation SLSS ID = 336 × *N*s_PSS + *N*s_SSS, where *N*s_PSS = {0,1} and *N*s_SSS = {0,1, ... ,335} represent an identifier of the S-PSS and S-SSS among the S-PSS and S-SSS candidate sequences.

A terminal device which acts as a SyncRef UE is configured to transmit the S-SSBs with a fixed periodicity of 160ms (16 radio frames). Within each S-SSB period, multiple S-SSBs can be transmitted, and the number of S-SSBs transmitted is (pre-)configured depending on the subcarrier spacing and frequency range.

In sidelink communication, synchronization sources have been divided into synchronization priority groups P0 ― P6 where P0 to P6 correspond to highest to lowest priorities, respectively. The synchronization sources are divided into two basic categories depending on whether the synchronization is based on GNSS or gNB/eNB. Table 1 illustrates an example of synchronization priority group assignment to different types of synchronization sources with respective values for SLSS IDs and "inCoverage" indicator.

**Table 1: Priority groups of synchronization reference sources**

| **Priority Group** | **GNSS-based synchronization** | **gNB/eNB-based synchronization** |
|---|---|---|
| P0 | GNSS | gNB/eNB |
| P1 | UE directly synchronized to GNSS (SyncRef UE in network coverage and directly synchronized to GNSS) inCoverage =1 and SLSS ID={0} | UE directly synchronized to gNB/eNB (SyncRef UE directly synchronized to gNB/eNB) inCoverage =1 and SLSS ID={1,...,335} |
| P2 | UE indirectly synchronized to GNSS (SyncRef UE out of GNSS/network coverage and one hop away from GNSS inCoverage =0 and SLSS ID={0} | UE indirectly synchronized to gNB/eNB (SyncRef UE out of GNSS/network coverage and one hop away from a gNB/eNB) inCoverage =0 and SLSS ID={1,...,335} |
| P3 | gNB/eNB | GNSS |
| P4 | UE directly synchronized to gNB/eNB (SyncRef UE directly synchronized to a gNB/eNB) inCoverage =1 and SLSS ID={1,...,335} | UE directly synchronized to GNSS (SyncRef UE directly synchronized to GNSS) inCoverage =1 and SLSS ID={0} |
| P5 | UE indirectly synchronized to gNB/eNB (SyncRef UE out of GNSS/network coverage and one hop away from a gNB/eNB) inCoverage =0 and SLSS ID={1,... ,335} | UE indirectly synchronized to GNSS (SyncRef UE out of GNSS/network coverage and one hop away from GNSS) inCoverage =0 and SLSS ID={0} |
| P6 | the remaining UEs have the lowest priority (SyncRef UE out of GNSS/network coverage and two or more hops away from a gNB/eNB or GNSS; UE's own internal clock) inCoverage =0 and SLSS ID={336,337,...,671} | |

Terminal devices perform sidelink synchronization to have the same sidelink timing reference for sidelink communication among nearby terminal devices by synchronizing with a synchronization source. In general, when a terminal device is about to select its synchronization source, the selection takes the synchronization priority group of the sources into account. In an embodiment, terminal devices determine the synchronization priority group, which the candidate SyncRef UEs belong to, based on synchronization information included in the SCI of the PSSCH, such as for instance based on an SLSS ID and a coverage indicator "inCoverage" included in the SCI, as illustrated for example in Table 1.

Typically, a terminal device selects the source with highest priority (Priority level P0) such as GNSS or eNB/gNB.

When there is no gNB/eNB or GNSS available as synchronization reference source, a terminal device may select a SyncRef UE as the synchronization reference source among candidate SyncRef UEs that are transmitting sidelink synchronization information (SLSS, PSBCH) in S-SSB with a fixed periodicity of 160ms (i.e. 16 radio frames).

A terminal device needing a synchronization reference, is configured to perform a full search (i.e. covering all subframes and all possible SLSS IDs) to detect candidate SLSS to look for possible SyncRef UEs. It may be noted that by detecting the SLSS sent by a SyncRef UE, a terminal device is able to synchronize to the SyncRef UE and estimate the beginning of the frame and carrier frequency. Upon a successful SLSS detection, a terminal device may proceed with decoding the PSBCH. If the terminal device has not selected a SyncRef UE as the source and multiple candidate SyncRef UEs (or SLSS IDs) are detected for which the Reference Signal Received Power of the PSBCH, PSBCH-RSRP, exceeds the minimum requirement and the corresponding MIB-SL is successfully received, the terminal device chooses the SyncRef UE with the highest PSBCH-RSRP as the source considering the priority levels given in Table 1.

The above situation may occur when terminal device is in a tunnel, an indoor environment, an underground area (e.g. parking lot) where gNB/eNB or GNSS coverage may not be available.

However, performing the full search for sidelink synchronization reference is power consuming and particularly expensive (in terms of power) for a power constrained terminal device such as a VRU. For example, even though a power constrained terminal device may be configured to apply discontinuous reception with sidelink, SL DRX, to save power, the terminal device may not get a chance to switch-off the radio frequency components completely (or fall into the deep sleep) due to full SL sync search. This may significantly reduce the power saving gain from SL DRX.

It may be noted that if the terminal device already has selected a SyncRef UE as the source, the terminal device may still be required perform a reselection of SyncRef UE to identify candidate SyncRef UEs which may potentially be more suitable to be a synchronization reference source.

It may be noted that current Release 16 NR sidelink design, which includes the sidelink synchronization operation with full search, did not take into account terminal devices which are power constrained. Therefore, there is a need for optimization of sidelink synchronization reference search considering power saving requirements for power constrained terminal devices.

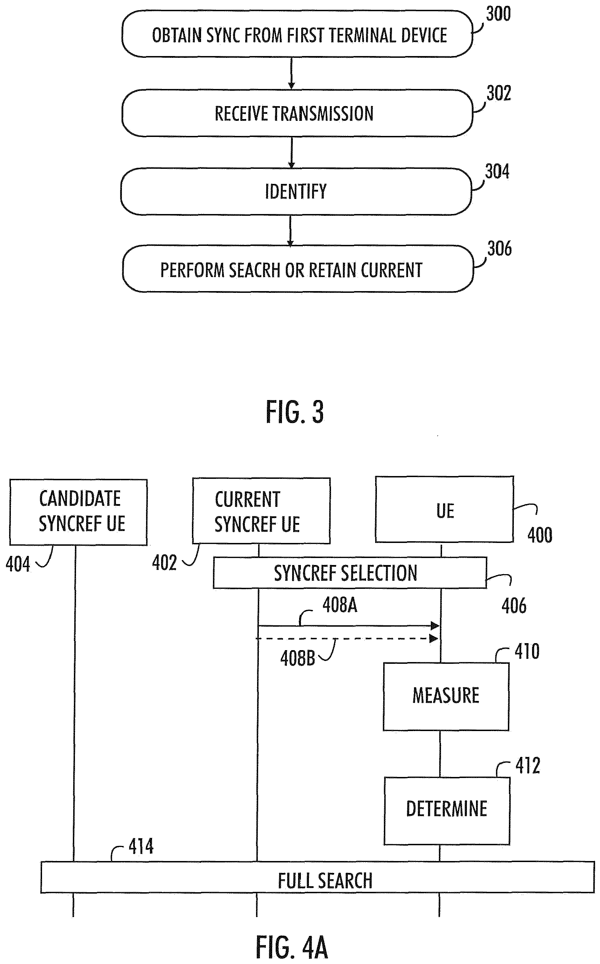

The flowchart of Fig. 3 illustrates an embodiment. The flowchart illustrates an example of the operation of an apparatus in sidelink communication. In an embodiment, the first apparatus may be a terminal device, user equipment, a part of a terminal device or any other apparatus capable of executing following steps. In an embodiment, the apparatus is a power constrained terminal device.

In step 300, the apparatus is configured to obtain first sidelink synchronization from a first terminal device acting as a synchronization source. The first terminal device is thus a SyncRef UE and may be denoted below as the current SyncRef UE.

In step 302, the apparatus is configured to receive sidelink shared channel transmissions from another terminal device.

In step 304, the apparatus is configured to identify the other terminal device as a candidate synchronization source based on second sidelink synchronization information included in a sidelink shared channel transmission received from the other terminal device.

In an embodiment, the second sidelink synchronization information is included in sidelink control information of a sidelink shared channel transmission received from the other terminal device.

In an embodiment, the second sidelink synchronization information may comprise at least one of: a sidelink synchronization signal identifier, a coverage indicator indicative of whether the other terminal device is within the coverage of a network synchronization source or a Global Navigation Satellite System, GNSS, synchronization source, and a capability indicator indicative of whether the other terminal acts as a synchronization source.

In step 306, the apparatus is configured to determine whether to perform a search for a synchronization source or to retain the first terminal device as the current synchronization source based on at least one of the first sidelink synchronization information, the second sidelink synchronization information, and measurement of at least one sidelink shared channel transmission received from the other terminal device.

Thus in an embodiment, instead of performing full SL synchronization search at every 160ms, a terminal device such as a power constrained terminal device may determine whether or not to trigger full synchronization search based on the information or properties obtained from ad-hoc sidelink transmissions from current and/or candidate SyncRef UEs. If determined not to trigger full synchronization search, the terminal device is configured to keep or retain the current SyncRef UE as the synchronization reference source and not trigger full SL synchronization search to save power at the terminal device.

In the proposed solution, power consumption of terminal devices for sidelink synchronization search is significantly reduced since the terminal device does not have to perform full search at every 160ms. This is particularly advantageous for power-constrained devices such as VRUs and for terminal devices in public safety and commercial use cases where the power saving is an important issue.

Figs. 4A to 4D are charts illustrating some embodiments. The figures illustrate examples of the operation of a power constrained terminal device 400 in sidelink communication. The examples illustrate the terminal device 400, the current SyncRef UE 402, and another terminal device 404 also acting as a SyncRef UE and being a candidate for a new SyncRef UE for terminal device 400. There may be a multitude of another terminal devices 404 although only one is illustrated for clarity.

The terminal device may receive sidelink shared channel transmissions from the current SyncRef UE and/or candidate SyncRef UE(s). Further, the terminal device may identify that the sidelink transmissions are from terminal devices acting as a synchronization source (i.e., transmitting/broadcasting the S-SSB) based on synchronization information included in the sidelink shared channel transmissions.

For example, in physical sidelink shared channel, PSSCH, and/or physical sidelink control channel, PSCCH, transmissions, a SyncRef UE may indicate that it is acting as a SyncRef UE, for example via 1-bit indicator in 1st stage Sidelink Control Information, SCI, carried over the PSCCH, or in the 2^{nd} stage SCI carried over the PSSCH, or via an SLSS ID and a coverage indicator in 1st and/or 2nd stage SCI, This enables the terminal device to identify if a PSCCH/PSSCH transmitting terminal device is a suitable SyncRef UE based on the received indication.

In an embodiment, the SLSS ID received in SCI from a suitable candidate SyncRef UE is used by the terminal device to speed up the search for a new synchronization source by looking for S-SSB(s) encoded with this SLSS ID and by skipping S-SSB encoded with other SLSS IDs, thereby achieving some substantial power saving. The search for a new synchronization source may also use information gathered during an initial or prior search for a synchronization source, such as the time and frequency position of S-SSBs encoded with the appropriate SLSS ID.

In an embodiment, the terminal device may monitor Reference Signal Received Power of the sidelink transmissions from those UEs which have identified themselves as a SyncRef UE in the associated SCIs. RSRP may provide a good measure of link quality with the current and candidate SyncRef UEs.

In the example of Fig. 4A, the terminal device 400 has performed a SyncRef source selection 406 and has selected the SyncRef UE 402 as its current synchronization source.

The terminal device 400 receives physical sidelink shared channel, PSSCH, transmission 408A from the current SyncRef UE 402.

The terminal device 400 measures 410 the Reference Signal Received Power, RSRP, of the received PSSCH.

The terminal device 400 compares 412 the RSRP of the received PSSCH to a given threshold, which may here be denoted as SyncSearchTrigThresPSSCH1.

If the signal strength is below the given threshold the terminal device 400 is configured to perform a search 414 for a new synchronization source as the RSRP value may indicate that the link quality with the current SyncRef UE may be deteriorating.

In another example also illustrated by Fig. 4A, the terminal device 400 receives physical sidelink broadcast channel, PSBCH, transmission 408B from the current SyncRef UE 402.

The terminal device 400 measures 410 the Reference Signal Received Power, RSRP, of the received PSBCH. In an embodiment, if a power constrained terminal device is configured with sidelink discontinuous reception, SL DRX, the terminal device is configured to wake up at least once per 160ms to check SL-SLSS and PSBCH from the current SyncRef UE regardless of its DRX configuration and to measure PSBCH-RSRP.

The terminal device 400 compares 412 the RSRP of the received PSBCH to a given threshold, which may here be denoted as sl-SyncSearchTrigThres.

If the signal strength is below the given threshold the terminal device 400 is configured to perform a search 414 for a new synchronization source.

This allows for the terminal device to keep the current SyncRef UE until its PSBCH-RSRP falls below sl-SyncSearchTrigThres and hence avoid triggering full sidelink synchronization search. It may be assumed here that, sl-SyncSearchTrigThres ≥ minimum required PSBCH-RSRP. Thus, by setting sl-SyncSearchTrigThres > minimum required PSBCH-RSRP, a sidelink synchronization search may be triggered before the PSBCH-RSRP drops below minimum required PSBCH-RSRP.

Additional conditions to trigger this mode may include the battery level of the terminal device, the reliability of the current synchronization source clock (such as the observed clock drift compared to the own clock of the terminal device), and the arrival time of the transmissions towards the terminal device being above a threshold, such as above the cyclic prefix. This could be an indication that there is another synchronization source nearby which all the other terminal devices are following.

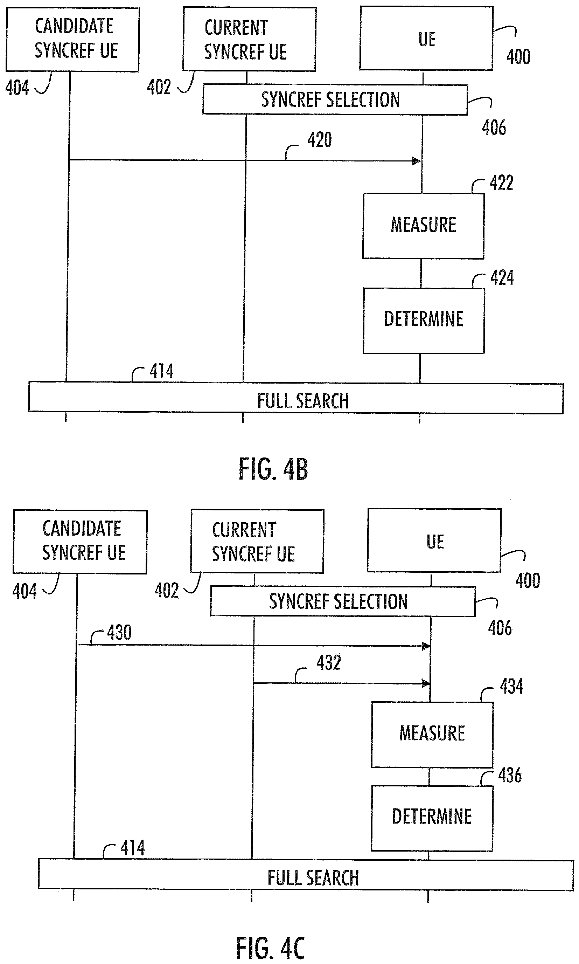

In the example of Fig. 4B, the terminal device 400 has performed a SyncRef source selection 406 and has selected the SyncRef UE 402 as its current synchronization source.

The terminal device 400 receives physical sidelink shared channel, PSSCH, transmission 420 from a candidate SyncRef UE 404.

In an embodiment, the terminal device monitors PSSCH-RSRP of the associated sidelink transmissions from those terminal devices which have identified themselves as a SyncRef UE in the associated SCIs (for example if SyncRefUEFlag=1 in the SCI, or if the SCI contains an SLSS ID and a coverage indicator).

The terminal device 400 measures 422 the Reference Signal Received Power, RSRP, of the received PSSCH.

The terminal device 400 compares 422 the RSRP of the received PSSCH to a given threshold, which may here be denoted as SyncSearchTrigThresPSSCH2. Further, the terminal device 400 determines the priority group, which the candidate SyncRef UE 404 belongs to, based on synchronization information included in the SCI of the PSSCH, for instance based on an SLSS ID and a coverage indicator included in the SCI, and on table 1.

If the signal strength is greater than the threshold and the candidate SyncRef UE belongs to a higher synchronization priority group than current SyncRef UE, then the terminal device 400 is configured to perform a search 414 for a new synchronization source as the results indicate that notably more suitable higher synchronization priority group SyncRef UE may be available as a new synchronization reference source. The search for a new synchronization source may be further optimized as aforementioned by restricting the search to S-SSB(s) encoded with the appropriate SLSS ID and/or based on prior search information.

In the example of Fig. 4C, the terminal device 400 may be configured to determine 436 the strongest signal strength of sidelink shared channel transmissions 430 received from the other terminal devices 404.

The terminal device 400 may be configured to compare the strongest signal strength to a given threshold denoted here as SyncSearchTrigThresPSSCH2.

The terminal device 400 may be configured to perform a search for a new synchronization source if the strongest signal strength is greater the given threshold, the terminal device transmitting the strongest signal strength belongs to the same synchronization priority group as the first terminal device (based on the SLSS ID and coverage indicator included in the SCI), and the strongest signal strength exceeds the signal strength of sidelink shared channel transmission or sidelink broadcast channel transmission received from the first terminal device by a second given threshold.

In another example also illustrated by Fig. 4C, the terminal device 400 has performed a SyncRef source selection 406 and has selected the SyncRef UE 402 as its current synchronization source.

The terminal device 400 receives physical sidelink shared channel, PSSCH, transmissions 430, 432 from the current and candidate SyncRef UEs 402, 404.

The terminal device 400 measures 434 the Reference Signal Received Power, RSRP, of the received PSSCHs.

The terminal device 400 compares 436 the signal strength of sidelink shared channel transmission received from the current and candidate SyncRef UEs to a given threshold, denoted here as SyncSearchTrigThresPSSCH3.

If the signal strength of all terminal devices is less the given threshold and if sidelink identification SLSS ID of the terminal devices has not been received but only 1-bit indication in Sidelink Control Information, the terminal device 400 is configured to perform a search 414 for a new synchronization source as the results indicate that the link quality with the current SyncRef UE may be deteriorating.

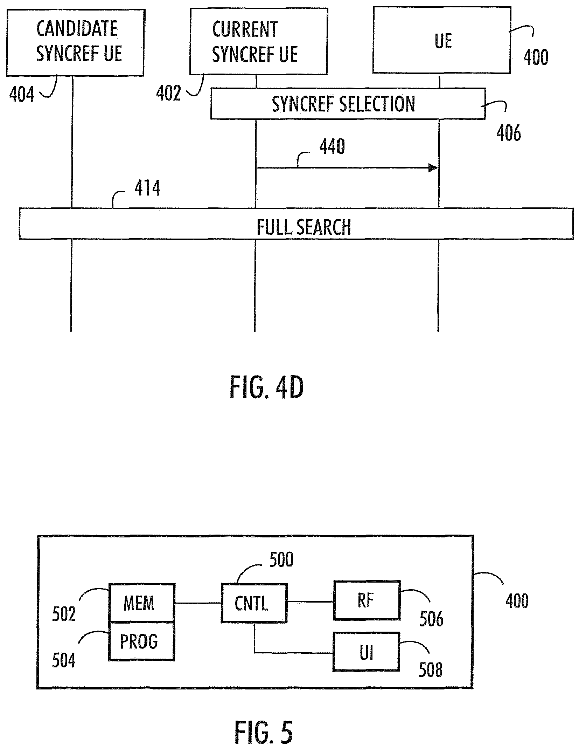

In the example of Fig. 4D, the terminal device 400 has performed a SyncRef source selection 406 and has selected the SyncRef UE 402 as its current synchronization source.

The terminal device 400 may be configured to receive a trigger from the first terminal device to perform a search for a new synchronization source. This may allow for the terminal device to keep the current SyncRef UE until the trigger is received from the current SyncRef UE and hence avoid triggering full SL sync search.

The trigger may be explicit or implicit.

In an embodiment, the trigger is included in the first sidelink synchronization information. The terminal device 400 may be configured to receive an explicit trigger from the current SyncRef UE to trigger full sidelink synchronization search at the terminal device. The trigger may be transmitted in PSBCH. For example, the trigger may be transmitted using a reserved bit in MIB-SL. In an embodiment, triggerFullSyncSearchFlag field in MIB-SL may be set to value 1 to explicitly indicate that the power constrained terminal device should perform full sync search. For example, the current SyncRef UE may transmit the trigger when PSBCH-RSRP of SL-SSB received from its own sidelink synchronization reference source is observed to be poor.

In an embodiment, the terminal device 400 may be configured to receive from the current SyncRef UE 402 a change in sidelink broadcast channel information and perform a search for a new synchronization source based on the change.

The terminal device may be configured to perform a search for a new synchronization source if the priority group of the current SyncRef UE 402 has changed to a lower priority group, for example.

For example, when the current SyncRef UE 402 is with synchronization priority group P1 or P4, the terminal device 400 is triggered to search for a new SyncRef UE if the current SyncRef UE 402 indicates that its synchronization priority group changed to lower priority, such as P2 or P5, in MIB-SL. Otherwise, the terminal device may keep the current SyncRef UE without any need of searching for a new SyncRef UE.

In an embodiment, the embodiment of Fig. 4D may be performed in connection with other embodiments of Figs. 4A to 4C. In an embodiment, the embodiment of Fig. 4D may be performed as a standalone operation without the other embodiments.

In an embodiment, the terminal device may transmit S-SSB to provide sidelink synchronization reference to neighbouring terminal devices. It may include fullSyncSearchFlag field in MIB-SL to indicate if it performs the sidelink synchronization search based on prior art Release 16 mechanism with full synchronization search (fullSyncSearchFlag=1), or with the proposed optimized synchronization search as part of Release 17 mechanism (fullSyncSearchFlag=0).

In an embodiment, a terminal device may be configured to act as a synchronization source for sidelink communication. It may be configured to transmit sidelink shared channel transmission and include sidelink synchronization information in the sidelink shared channel transmission.

In an embodiment, the terminal device may be configured to include a sidelink synchronization signal identifier, SLSS ID, and a coverage indicator of the terminal device in the sidelink shared channel transmission. It may further be configured to include in the sidelink shared channel transmission a flag indicating that the terminal device acts as a synchronization source for sidelink communication.

Fig. 5 illustrates an embodiment. The figure illustrates a simplified example of an apparatus applying embodiments of the invention. In some embodiments, the apparatus may be a terminal device 400 or a part of a terminal device of a telecommunication system.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus 400 of the example includes a control circuitry 500 configured to control at least part of the operation of the apparatus.

The apparatus may comprise a memory 502 for storing data. Furthermore, the memory may store software 504 executable by the control circuitry 500. The memory may be integrated in the control circuitry.

The apparatus may comprise one or more interface circuitries 506, 508. The interface circuitries are operationally connected to the control circuitry 500. An interface circuitry 506 may be a set of transceivers configured to communicate with a RAN node, such as an (e/g)NodeB of a wireless communication network, or communicate utilising sidelink communication with another terminal device. The interface circuitry may be connected to an antenna arrangement (not shown). The apparatus may also comprise a connection to a transmitter instead of a transceiver. The apparatus may further comprise a user interface 508.

In an embodiment, the software 504 may comprise a computer program comprising program code means adapted to cause the control circuitry 500 of the apparatus to realise at least some of the embodiments described above.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described steps may be implemented as an electronic digital computer, processing system or a circuitry which may comprise a working memory (random access memory, RAM), a central processing unit (CPU), and a system clock. The CPU may comprise a set of registers, an arithmetic logic unit, and a controller. The processing system, controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides an apparatus in a communication system comprising at least one processor; and at least one memory including computer program code, the at least one memory and computer program code configured to, with the at least one processor, cause the apparatus to: obtain first sidelink synchronization information from a first terminal device acting as a synchronization source; receive sidelink shared channel transmissions from another terminal device; identify the other terminal device as a candidate synchronization source based on second sidelink synchronization information included in a sidelink shared channel transmission received from the other terminal device; determine whether to perform a search for a new synchronization source or to retain the first terminal device as the current synchronization source based on at least one of the first sidelink synchronization information, the second sidelink synchronization information, and measurement of at least one sidelink shared channel transmission received from the other terminal device.

An embodiment provides a computer program embodied on a distribution medium, comprising program instructions which, when loaded into an electronic apparatus, are configured to control the apparatus to execute at least the following: obtain first sidelink synchronization information from a first terminal device acting as a synchronization source; receive sidelink shared channel transmissions from another terminal device; identify the other terminal device as a candidate synchronization source based on second sidelink synchronization information included in a sidelink shared channel transmission received from the other terminal device; determine whether to perform a search for a new synchronization source or to retain the first terminal device as the current synchronization source based on at least one of the first sidelink synchronization information, the second sidelink synchronization information, and measurement of at least one sidelink shared channel transmission received from the other terminal device.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst several computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

It will be obvious to a person skilled in the art that, as the technology advances, the inventive concept can be implemented in various ways. The invention and its embodiments are not limited to the examples described above but may vary within the scope of the claims.

## Claims

1. A terminal device comprising means configured to:
obtain first sidelink synchronization information from a first terminal device acting as a synchronization source;
receive sidelink shared channel transmissions from another terminal device;
identify the other terminal device as a candidate synchronization source based on second sidelink synchronization information included in a sidelink shared channel transmission received from the other terminal device;
determine whether to perform a search for a new synchronization source or to retain the first terminal device as the current synchronization source based on at least one of the first sidelink synchronization information, the second sidelink synchronization information, and measurement of at least one sidelink shared channel transmission received from the other terminal device.

2. The terminal device of claim 1, wherein the second sidelink synchronization information is included in sidelink control information of a sidelink shared channel transmission received from the other terminal device.

3. The terminal device of claim 1 or 2, wherein the second sidelink synchronization information comprises at least one of:
a sidelink synchronization signal identifier;
a coverage indicator indicative of whether the other terminal device is within the coverage of a network synchronization source or a Global Navigation Satellite System synchronization source; and
a capability indicator indicative of whether the other terminal acts as a synchronization source.

4. The terminal device of any of claims 1 to 3, further comprising means configured to:
determine a signal strength of at least one sidelink shared channel transmission received from the other terminal device;
perform a search for a new synchronization source if the signal strength is greater than a threshold and if the other terminal device belongs to a higher synchronization priority group than the first terminal device.

5. The terminal device of any of claims 1 to 4, further comprising means configured to:
determine a first signal strength of at least one sidelink shared channel transmission received from the other terminal device;
determine a second signal strength of at least one sidelink shared or broadcast channel transmission received from the first terminal device;
perform a search for a new synchronization source if the first signal strength is greater than a first threshold, if the other terminal device belongs to a same synchronization priority group as the first terminal device, and if the first signal strength exceeds the second signal strength by a second threshold.

6. The terminal device of claim 1, further comprising means configured to:
receive a trigger from the first terminal device to perform a search for a new synchronization source, the trigger being included in the first sidelink synchronization information.

7. The terminal device of claim 1 or 6, further comprising means configured to:
perform a search for a new synchronization source if the priority group of the first terminal device has changed to a lower synchronization priority group.

8. The terminal device of any preceding claim, wherein sidelink shared channel transmissions are transmissions through at least one of a Physical Sidelink Shared Channel PSSCH and a Physical Sidelink Control Channel PSCCH.

9. A method in an apparatus of a communication system, comprising:
obtaining first sidelink synchronization information from a first terminal device acting as a synchronization source;
receiving sidelink shared channel transmissions from another terminal device;
identifying the other terminal device as a candidate synchronization source based on second sidelink synchronization information included in a sidelink shared channel transmission received from the other terminal device;
determining whether to perform a search for a new synchronization source or to retain the first terminal device as the current synchronization source based on at least one of the first sidelink synchronization information, the second sidelink synchronization information, and measurement of at least one sidelink shared channel transmission received from the other terminal device.

10. The method of claim 9, wherein the second sidelink synchronization information is included in sidelink control information of a sidelink shared channel transmission received from the other terminal device.

11. The method of claim 9 or 10, wherein the second sidelink synchronization information comprises at least one of:
a sidelink synchronization signal identifier;
a coverage indicator indicative of whether the other terminal device is within the coverage of a network synchronization source or a Global Navigation Satellite System synchronization source; and
a capability indicator indicative of whether the other terminal acts as a synchronization source.

12. The method of any of claims 9 to 11, further comprising:
determining a signal strength of at least one sidelink shared channel transmission received from the other terminal device;
performing a search for a new synchronization source if the signal strength is greater than a threshold and if the other terminal device belongs to a higher synchronization priority group than the first terminal device.

13. The method of any of claims 9 to 12, further comprising:
determining a first signal strength of at least one sidelink shared channel transmission received from the other terminal device;
determining a second signal strength of at least one sidelink shared or broadcast channel transmission received from the first terminal device;
performing a search for a new synchronization source if the first signal strength is greater than a first threshold, if the other terminal device belongs to a same synchronization priority group as the first terminal device, and if the first signal strength exceeds the second signal strength by a second threshold.

14. A computer program comprising instructions for causing an apparatus to perform at least the following:
obtaining first sidelink synchronization information from a first terminal device acting as a synchronization source;
receiving sidelink shared channel transmissions from another terminal device;
identifying the other terminal device as a candidate synchronization source based on second sidelink synchronization information included in a sidelink shared channel transmission received from the other terminal device;
determining whether to perform a search for a new synchronization source or to retain the first terminal device as the current synchronization source based on at least one of the first sidelink synchronization information, the second sidelink synchronization information, and measurement of at least one sidelink shared channel transmission received from the other terminal device.
